# EUROPEAN PATENT APPLICATION

(11) **EP 1 942 044 A1**
(43) Date of publication of application: **09.07.2008**
(21) Application number: 06811548.4
(22) Date of filing: 04.10.2006
(51) Int. Cl.: B62D 6/00, B62D 5/04

(54) **CONTROLLER OF ELECTRIC POWER STEERING DEVICE**

(30) Priority: 04.10.2005 JP 2005290632
(71) Applicant: NSK Ltd., Tokyo 141-8560 (JP)
(72) Inventor: YAMAMOTO, Satoshi, Maebashi-shi, Gunma 371-8527 (JP); HARA, Takeshi, Maebashi-shi, Gunma 371-8527 (JP); ENDO, Shuji, Maebashi-shi, Gunma 371-8527 (JP)
(74) Representative: Hooiveld, Arjen Jan Winfried
(86) International application number: PCT/JP2006/320236
(87) International publication number: WO 2007/043539

(57) **Abstract**

According to the present invention, a control unit of an electric power steering apparatus transmitting a steering assist force generated by a motor to a steering mechanism so as to reduce a steering force, the control unit includes a steering angle sensor for detecting a steering angle, a torque sensor for detecting a steering torque, a vehicle speed detecting means for detecting a vehicle speed, and a control means for controlling the motor on the basis of the steering angle, a steering angular speed, the steering torque and the vehicle speed, and the control means has a handle return control function, and corrects a steering feeling in accordance with the steering angle on the basis of the handle return control function.

## Description

### Technical Field

The present invention relates to an improvement of a control unit of an electric power steering apparatus structured such as to control an assist amount of a handle (steering wheel) on the basis of a steering torque and a vehicle speed, and more particularly to a control unit of an electric power steering apparatus which improves a handle return control (an active return) of the electric power steering apparatus in which an uncomfortable feeling is generated due to some factor (a steering geometry, a suspension or the like).

### Background Art

An electric power steering apparatus energizing (assisting) by an assist load a steering apparatus of an automobile or a vehicle on the basis of a rotating force of a motor is structured such as to apply a driving force of the motor as the assist load to a steering shaft or a rack shaft by a transmission mechanism such as gears, a belt or the like via reduction gears. The conventional electric power steering apparatus mentioned above carries out a feed-back control of a motor current for accurately generating an assist torque (a steering assist torque). The feed-back control adjusts a motor applying voltage in such a manner that a difference between a current command value and a detected motor current value becomes small, and an adjustment of the motor applying voltage is generally achieved by adjusting a duty ratio of a pulse width modulation (PWM) control.

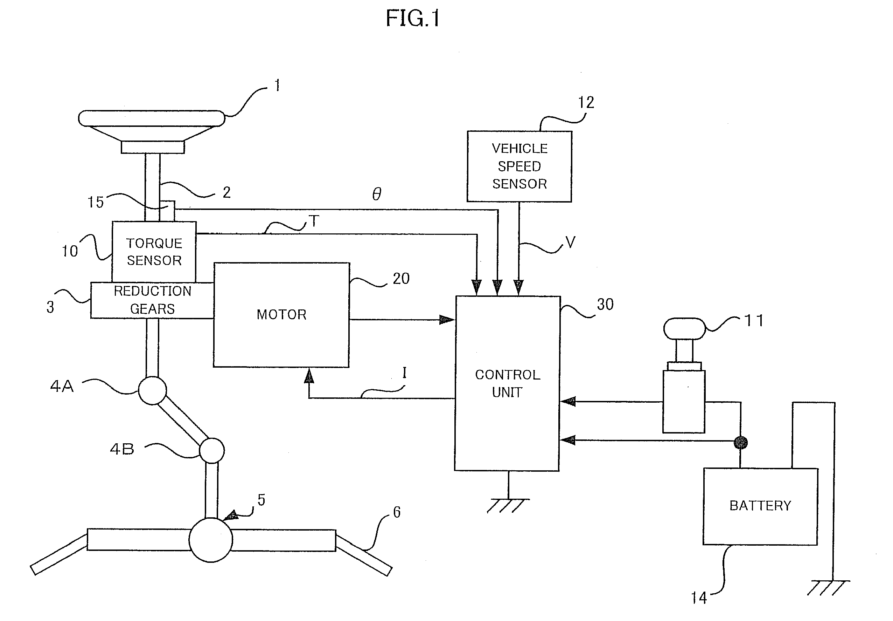

In this case, a description will be given of a general structure of the electric power steering apparatus with reference to FIG. 1. A steering shaft (a column shaft) 2 of a handle (steering wheel) 1 is coupled to a tie rod 6 of steered wheels via reduction gears 3, universal joints 4A and 4B and a pinion-rack mechanism 5. The steering shaft 2 is provided with a torque sensor 10 detecting a steering torque T of the handle 1, and a motor 20 assisting a steering force of the handle 1 is coupled to the steering shaft 2 via the reduction gears 3. An electric power is supplied to a control unit 30 controlling the power steering apparatus from a battery 14, and an ignition key signal is inputted thereto from an ignition key 11. Further, the steering shaft 2 is provided with a steering angle sensor 15 for detecting a steering angle θ, and a steering angle θ from the steering angle sensor 15 is inputted to the control unit 30. The control unit 30 carries out a calculation of a steering assist command value I of an assist command on the basis of a steering torque T detected by the torque sensor 10 and a vehicle speed V detected by a vehicle speed sensor 12, and controls a current supplied to the motor 20 on the basis of the calculated steering assist command value I.

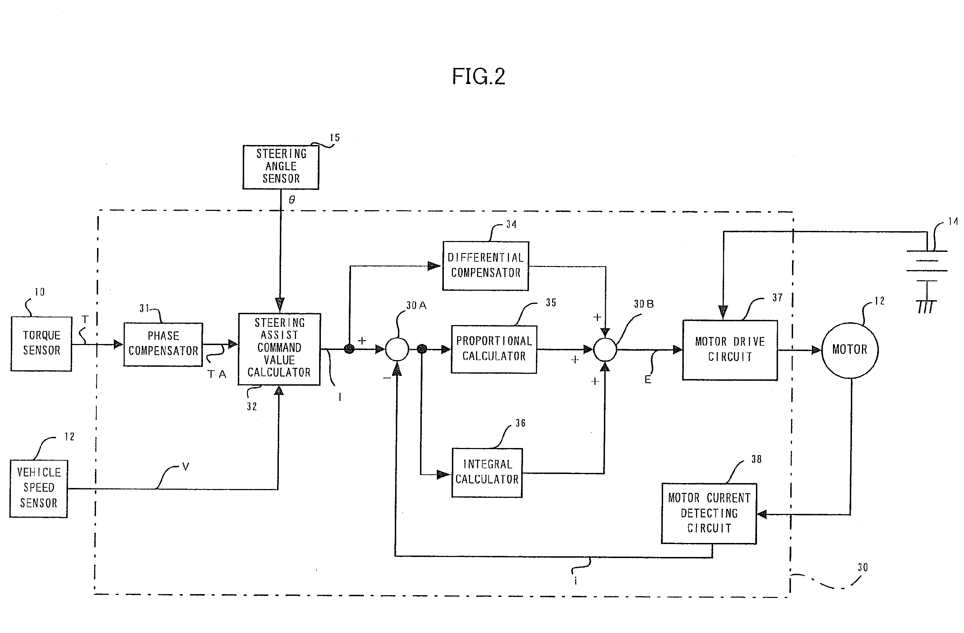

The control unit 30 is mainly constituted by a CPU (including a micro processor unit (MPU) and a micro controller unit (MCU)), however, a general function executed by a program in an inner portion of the CPU is shown by FIG. 2. For example, a phase compensator 31 does not indicate a phase compensator according with a hardware, but indicates a phase compensating function executed by the CPU.

A description will be given of a function and an operation of the control unit 30 with reference to FIG. 2. The steering torque T detected by the torque sensor 10 so as to be inputted is phase-compensated by the phase compensator 31 for improving a stability of a steering system, and a phase-compensated steering torque TA is inputted to a steering assist command value calculator 32. Further, the vehicle speed V detected by the vehicle speed sensor 12, and the steering angle θ from the steering angle sensor 15 are inputted to the steering assist command value calculator 32. The steering assist command value calculator 32 determines the steering assist command value I according with a control target value of the electric current supplied to the motor 20 on the basis of the inputted steering torque TA and vehicle speed V. The steering assist command value I is inputted to a subtracter 30A and is inputted to a differential compensator 34 of a feed-forward system for improving a response speed, and a deviation (I - i) of the subtracter 30A is inputted to a proportional calculator 35, and is inputted to an integral calculator 36 for improving a characteristic of a feed-back system. In addition to an output of the differential compensator 34, outputs of the proportional calculator 35 and the integral calculator 36 are added and inputted to an adder 30B, a current control value E according with a result of addition in the adder 30B is inputted as a motor drive signal to a motor drive circuit 37, and the motor 20 is driven. A current i of the motor 20 is detected by a motor current detecting circuit 38, and is feed-backed to the subtracter 30A.

In the electric power steering apparatus as mentioned above, Japanese Patent Application Laid-Open No. 62-187653 (Patent Document 1) proposes a steering apparatus structured such as to improve a steering feeling by making a steering rack variable back and forth, in an Ackerman steering geometry and a parallel steering geometry in the case that a vehicle speed is low and high, regardless of a driving state of the vehicle. In other words, the steering apparatus includes a coupling member coupling knuckle arms attached to front right and left wheels via a tie rod and moved in a lateral direction in accordance with a steering operation of the handle, and a moving means for moving the coupling member in a direction of a front wheel of the vehicle, thereby changing a relation of a steering angle between a right wheel and a left wheel defined in accordance with the steering operation of the handle.

Further, Japanese Patent No. 3551147 (Patent Document 2) discloses a handle return control (an active return) as a subtracting method of an assist torque. In other words, the structure is made such as to be provided with a handle return control section returning a handle to a neutral point by using a steering angle sensor so as to always carry out a convergence control as well as carrying out a handle return control, and balance the handle return control and the convergence control by suppressing a return current in accordance with an increase of a steering angular speed.

In the apparatus of the Patent Document 1 mentioned above, a primary cause (a steering geometry) relating a controllability (a turning performance) of the vehicle is solved by introducing a geometry variable system, however, an uncomfortable feeling of a steering force is not compensated. Further, since a novel system (the geometry variable system) is necessary, a cost increase is caused.

The apparatus of the Patent Document 2 attaches importance to the handle return, and a steering angle - return current table is set for a suitable handle return, and does not compensate for the uncomfortable feeling of the steering force.

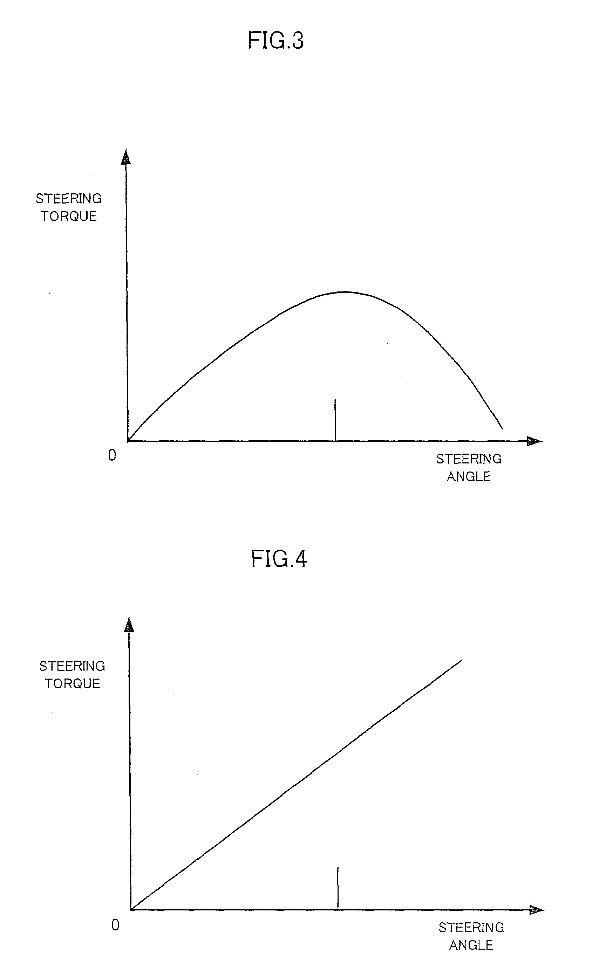

In this case, there is a vehicle in which a relation between the steering angle and the steering torque comes to a relation applying an uncomfortable feeling to a driver due to a factor such as a vehicle layout or the like. As an example, an employment of a steering geometry having a characteristic similar to the parallel geometry is increased. In a vehicle designed by a complete parallel geometry and a vehicle designed by an Ackerman geometry, a relation between the steering angle and the steering torque at a time of a low speed has characteristics shown in FIGs. 3 and 4. FIG. 3 shows a steering angle - steering torque characteristic of a parallel geometry, which is a characteristic that the steering torque becomes large in accordance with an increase of the steering angle at a time when the steering angle is small, and the steering torque becomes small in accordance with an enlargement of the steering angle from a midstream. This comes to a factor giving an uncomfortable feeling to the driver. Further, FIG. 4 shows an ideal steering angle - steering torque characteristic in the Ackerman geometry, in which the steering torque is increased linearly in proportion to the steering angle.

In the vehicle designed by the parallel geometry as mentioned above, since a slip angle of a turning inner wheel is inverted to an opposite direction, a self-aligning torque (SAT) is inverted to a divergent side, the steering torque becomes light if the steering angle becomes large, and an uncomfortable feeling is applied to the driver.

### Disclosure of the Invention

The present invention is made by taking the circumstances mentioned above into consideration, and an object of the present invention is to provide a control unit of an electric power steering apparatus in which a performance is improved by correcting a steering feeling in accordance with a steering angle on the basis of a handle return control. The present invention corrects for an uncomfortable feeling of a steering force caused by a problem in a vehicle side, by designing a steering angle - return current table for compensating a relation between a steering angle - steering force of a vehicle.

The present invention relates to a control unit of an electric power steering apparatus transmitting a steering assist force generated by a motor to a steering mechanism so as to reduce a steering force. The obj ect of the present invention is achieved by a control unit of an electric power steering apparatus including a steering angle sensor for detecting a steering angle of a steering shaft, a torque sensor for detecting a steering torque applied to the steering shaft, a vehicle speed detecting means for detecting a vehicle speed, and a control means for controlling a motor on the basis of the steering angle, a steering angular speed of the steering angle, the steering torque and the vehicle speed, wherein the control means has a handle return control function, and corrects a steering feeling in accordance with the steering angle on the basis of the handle return control function.

The object of the present invention can be more effectively achieved by output-controlling the handle return control function on the basis of a condition, or the condition including an abnormal and inhibiting signal of the apparatus during an operation.

### Brief Description of the Drawings

FIG. 1 is a schematic structural view showing an outline of a general electric power steering apparatus;
FIG. 2 is a block configuration view showing an example of a controller;
FIG. 3 is a characteristic view showing a characteristic example of a conventional apparatus;
FIG. 4 is a characteristic view showing a characteristic example of a conventional apparatus;
FIG. 5 is a block configuration view showing an example of a control unit in accordance with the present invention;
FIG. 6 is a block diagram showing a structure example of a handle return control section;
FIG. 7 is a flow chart showing an operation example of the handle return control section;
FIG. 8 is a characteristic view showing a characteristic example in accordance with the present invention; and
FIG. 9 is a characteristic view showing a characteristic example in accordance with the present invention.

### Best Mode for Carrying Out the Invention

The present invention provides a control unit of an electric power steering apparatus which transmits a steering assist force generated by a motor to a steering mechanism so as to reduce the steering assist force. The control unit includes a steering angle sensor for detecting a steering angle of a steering shaft, a means for obtaining an angular speed of the steering angle, a torque sensor for detecting a steering torque applied to the steering shaft, and a vehicle speed detecting means for detecting a vehicle speed, determines a handle return control current in accordance with the obtained steering angle, steering angular speed, steering torque and vehicle speed, and compensates a current command value by the handle return control current. That is, a steering angle - return current table is designed for compensating a relation between a steering angle and a steering force of a vehicle, thereby to correct an uncomfortable feeling of the steering force due to a problem in a vehicle.

In the present invention, in the vehicle indicating a characteristic of the steering angle and the steering torque such as the parallel geometry, a steering feeling desired by a driver is obtained by compensating the current command value by the handle return control current in accordance with the steering angle and applying the steering reaction force to the large steering angle. Accordingly, it is possible to reproduce an ideal reaction force characteristic regardless of the steering geometry.

A description will be given below of an embodiment in accordance with the present invention with reference to the accompanying drawings.

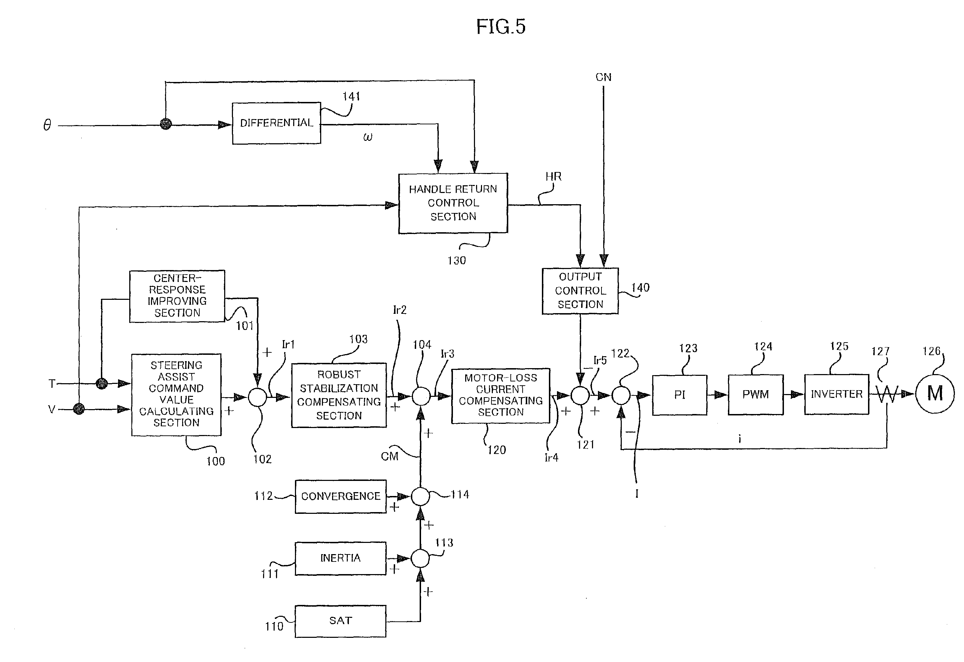

FIG. 5 is a block diagram showing an embodiment of a control unit in accordance with the present invention. A steering torque T from a torque sensor attached to a steering shaft is inputted to a steering assist command value calculating section 100 and a center-response improving section 101, each of outputs is inputted to an adding section 102, and a result of addition (a current command value Ir1) is inputted to a robust stabilization compensating section 103. The center-response improving section 101 secures a stabilization in an assist characteristic dead zone and compensates for a static friction, and the robust stabilization compensating section 103 for removing a peak value of a resonance frequency of a resonance system including an inertia element included in a detected torque and a spring element, and compensates for a phase difference of the resonance frequency avoiding a stability and a response of the control system. A current commandvalue Ir2 compensated by the robust stabilization compensating section 103 is inputted to an adding section 104.

Further, a vehicle speed V from a vehicle speed sensor or the like is inputted to the steering assist command value calculating section 100, and is also inputted to a handle return control section 130. Since an acceleration sensor is mounted to a vehicle, and an acceleration signal with respect to back and forth directions can be obtained, the vehicle speed V can be obtained by acquiring via a controller area network (CAN) or the like so as to integrate.

Still further, a compensation signal CM is added to the adding section 104, and a compensation of a system is carried out by adding the compensation signal CM, thereby to improve a convergence characteristic, an inertia characteristic and the like. That is, a self-aligning torque (SAT) 110 and an inertia 111 are added by an adding section 113, a convergence characteristic 112 is further added to a result of addition by an adding section 114, and a result of addition of the adding section 114 is set to the compensation signal CM. The inertia compensation performed by excluding a torque accelerating or decelerating a motor inertia from the steering torque so as to form a steering feeling having no inertia feeling, and the convergence characteristic control is performed by applying a brake to a whirling motion of the handle for improving a convergence of a yaw of the vehicle.

A current command value Ir3 compensated by the adding section 104 is inputted to a motor-loss current compensating section 120, and an output (a current command value Ir4) thereof is inputted to an adding section 121. The motor-loss current compensating section 120 adds a current which does not appear in the motor output even if the motor current is applied, and improves a rising edge of the motor output torque from zero.

Further, a steering angle θ from a steering angle sensor attached to a steering shaft is inputted to a handle return control section 130, and a steering angular speed ω differentiated by a differential section 141 is also inputted to the handle return control section 130. A vehicle speed V is also inputted to the handle return control section 130, and a handle return control signal HR from the handle return control section 130 is inputted to the subtracting section 121 via an output control section 140 controlled by a condition signal CN.

The handle return control signal HR from the handle return control section 130 is subtraction-inputted to the subtracting section 121 via the output control section 140, and the vehicle speed V, the steering angle θ and the steering angular speed ω are inputted to the handle return control section 130. As the steering angular speed ω, the present embodiment employs a differential value (dθ /dt) obtained by differentiating the steering angle θ from the steering angle sensor by a differential section 141, however, may utilize amotor angular speed estimated by a motor angular speed estimating section (not shown), or a value of a steering angular speed sensor may be used.

The handle return control signal HR is subtracted by the subtracting section 121 from the current command value Ir4 outputted from the motor-loss current compensating section 120, a current command value Ir5 (= Ir4 - HR) corresponding to a subtracted value is further inputted to a subtracting section 122, a deviation I (= Ir5 - i) from a feed-back motor current value i is calculated, and the deviation I is inputted to a PI control section 123 for improving a characteristic of the steering motion. A steering assist command value Vref which is improved its characteristic by the PI control section 123 is inputted to a PWM control section 124, and a motor 126 is PWM-driven via an inverter 125 serving as a drive section. The motor current value i of the motor 126 is detected by a motor current detector 127, and is feed-backed to the subtracting section 122. FETs are used as a driving device of the inverter 125, and the inverter 125 is constructed with a bridge circuit of the FETs.

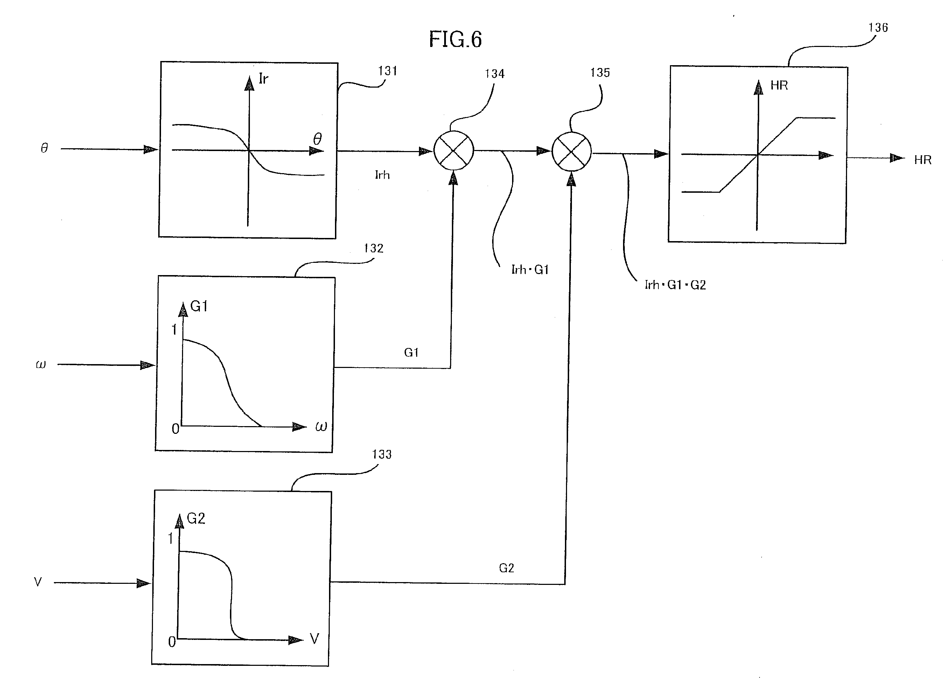

FIG. 6 shows a structure example of the handle return control section 130. The handle return control section 130 includes a handle return basic current section 131 for outputting a handle return basic current value Irh in accordance with a predetermined function on the basis of the steering angle θ, a gain section 132 for inputting the steering angular speed ω and outputting a steering angular speed sensitive-gain G1 (maximum value "1") in accordance with the steering angular speed ω on the basis of a predetermined function, a gain section 133 for inputting the vehicle speed V and outputting a vehicle speed sensitive-gain G2 (maximum value "1") in accordance with the vehicle speed V on the basis of a predetermined function, a multiplying section 134 for multiplying the handle return basic current value Irh from the handle return basic current Irh by the steering angular speed sensitive-gain G1 from the gain section 132, a multiplying section 135 for multiplying an output "Irh·G1" from the multiplying section 134 by the vehicle speed sensitive-gain G2 from the gain section 133, and a limiter 136 limiting a current value "Irh-G1-G2" outputted from the multiplying section 135 between an upper, positive maximum value and a lower, negative maximum value.

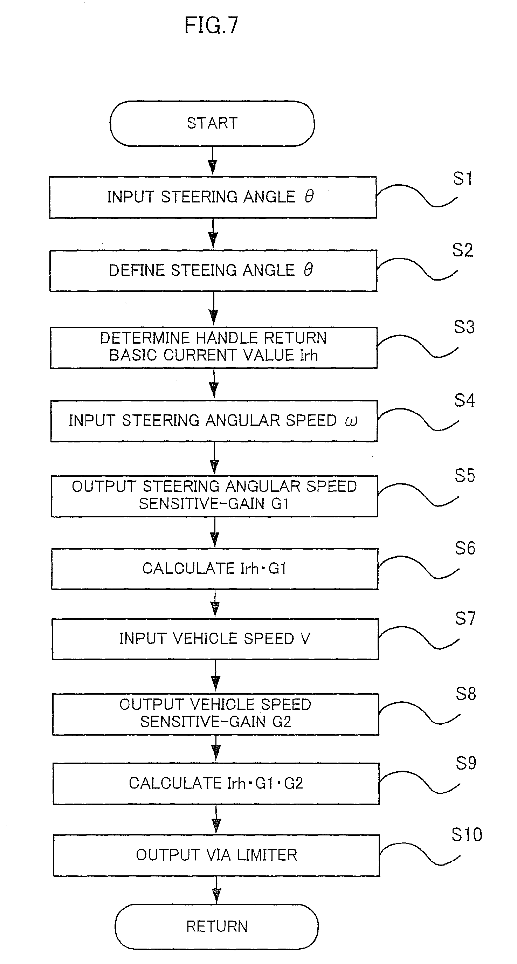

FIG. 7 shows an operation example of the handle return control section 130.

First, the handle return control section 130 inputs the steering angle θ from the steering angle sensor so as to read (Step S1), and determines the steering angle θ on the basis of a neutral point θ c (Step S2). The definition of the steering angle θ is determined by an expression "θ=θr - θc" on the assumption that the read value is set to θ r. Further, the handle return basic current section 131 determines the handle return basic current value Irh from the steering angle θ (Step S3), and next inputs the steering angular speed ω so as to read (Step S4). Further, the steering angular speed sensitive-gain G1 is outputted from the gain section 132 by inputting the steering angular speed ω (Step S5), and the current value "Irh·G1" is calculated by the multiplying section 134 (Step S6) . Next, the vehicle speed V is inputted so as to be read (Step S7), the vehicle speed sensitive-gain G2 is outputted from the gain section 133 (Step S8), the current value "Irh·G1·G2" is multiplied in the multiplying section 135 (Step S9), and the handle return control signal HR is outputted via the limiter 136 (Step S10).

In this case, an inputting order of the steering angle θ, the steering angular speed ω and the vehicle speed V is optional, as far as the current value "Irh·G1·G2" is determined as a result.

Further, the output control section 140 for controls so as to turn-on and -off the input of the handle return control signal HR to the subtracting section 121 on the basis of the condition signal CN, and is structured such as to stops (turn-off) the input of the handle return control signal HR to the subtracting section 121 on the basis of the condition signal CN at an abnormal time of the steering angle sensor, an abnormal time of a Hall sensor, and an assist stop time.

In the structure mentioned above, a description will be given of an operation thereof.

In the case that the output control section 140 is turned-off by the condition signal CN, the handle return control signal HR from the handle return control section 130 is not inputted to the subtracting section 121. That is, the steering assist command value calculating section 100 calculates the assist current command value Iref on the basis of the steering torque T and the vehicle speed V, and inputs the current command value Ir1 obtained by adding the improving signal from the center-response improving section 101 by the adding section 102 to the robust stabilization compensating section 103, and the robust stabilized current command value Ir2 is inputted to the adding section 104. The compensation signal CM in accordance with the SAT 110, the inertia 111 and the convergence characteristic 112 is added to the current command value Ir2 in the adding section 104, the current command value Ir3 is compensated by the motor-loss current compensating section 120, and is inputted to the PI control section 123 via the subtracting sections 121 and 122, and the normal assist having no handle return control signal HR is executed.

On the other hand, in the case that the output control section 140 is turned-on by the condition signal CN, the handle return control signal HR from the handle return control section 130 is inputted to the subtracting section 121. In other words, in the present invention, the handle return control for reducing the assist in accordance with the steering angle θ is carried out, and the current command value correcting the reducing torque is previously set as the current command value in accordance with the steering angle θ. With regard to the steering angular speed ω and the vehicle speed V, the gains G1 and G2 in which the maximum value is "1" are set, and the current command value "Irh-G1-G2" obtained by multiplying the steering angular speed sensitive-gain G1 and the vehicle speed sensitive-gain G2 by the basics current value Irh calculated from the steering angle θ is subtracted from the current command value Ir4 in the subtracting section 121 in an opposite side to the output of the torque system, that is, for a calculation so as to remove the assist. Accordingly, it is possible to apply the steering reaction force in accordance with the steering angle θ.

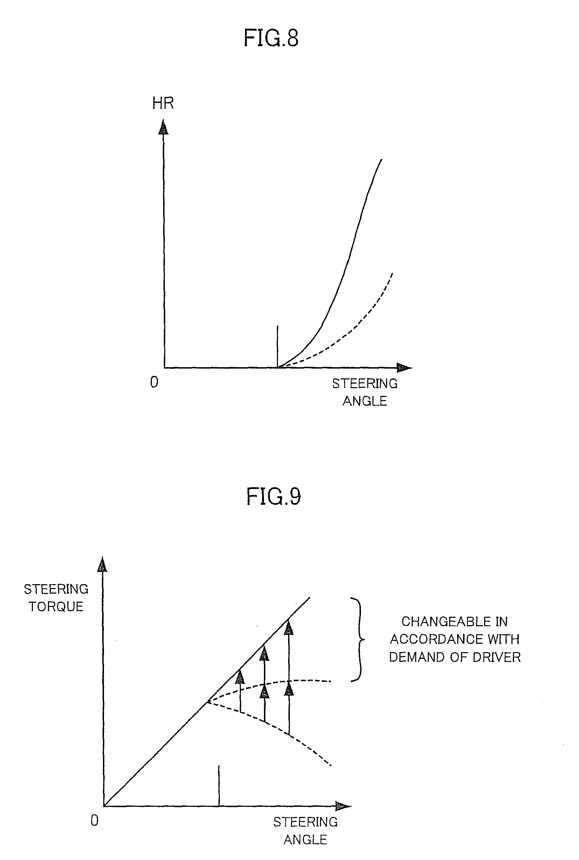

As mentioned above, in accordance with the present invention, since the handle return control function is employed, it is possible to achieve a steering feeling with no uncomfortable feeling and a handle return by setting the output of the handle return control large as shown in FIGs. 8 and 9, in the large steering angle in which the steering reaction force is inversely applied in the large steering angle at a time of a low speed, and applying the steering reaction force.

FIG. 8 shows a characteristic of the handle return control signal HR with respect to the steering angle θ, and FIG. 9 shows a characteristic of the steering torque with respect to the steering angle θ. As described in FIG. 3, since driver feels uncomfortable if the steering torque is reduced in accordance with the enlargement of the steering angle θ , it is possible to correct the steering force characteristic as shown by a solid line in FIG. 8 by setting the characteristic of the steering angle of the handle return control-output (the handle return control signal HR) as shown by the solid line in FIG. 8 for correcting the uncomfortable feeling. Further, it is possible to set the steering force characteristic as shown by a dotted line in FIG. 9.

In accordance with the control unit of the electric power steering apparatus on the basis of the present invention, it is possible to reproduce the ideal reaction characteristic regardless of the steering geometry. The present invention is structured such as to always carry out the handle return control as well as always carrying out the convergence characteristic control. Accordingly, it is possible to balance with the convergence characteristic control by adjusting the handle return control in accordance with the steering angular speed, thereby taking advantages of both the controls in all the regions, and obtaining a good steering feeling.

Further, in accordance with the present invention, it is possible to reduce an adverse influence which the handle return current exerts on the convergence characteristic, by adjusting the output of the handle return control by the output gain in according with the steering angular speed and suppressing the return current at a time when the steering angular speed is high. Accordingly, it is possible to always actuate the handle return control and the convergence characteristic control in parallel, and it is possible to achieve both the secure handle return to the neutral point and the quick convergence characteristic without deteriorating the advantages of the both.

## Claims

1. A control unit of an electric power steering apparatus transmitting a steering assist force generated by a motor to a steering mechanism so as to reduce a steering force, comprising:
a steering angle sensor for detecting a steering angle of a steering shaft;
a torque sensor for detecting a steering torque applied to the steering shaft;
a vehicle speed detecting means for detecting a vehicle speed; and
a control means for controlling the motor on the basis of the steering angle, a steering angular speed of the steering angle, the steering torque and the vehicle speed,
wherein the control means has a handle return control function, and corrects a steering feeling in accordance with the steering angle on the basis of the handle return control function.

2. A control unit of an electric power steering apparatus according to claim 1, wherein the handle return control function is output-controlled on the basis of a condition.

3. A control unit of an electric power steering apparatus according to claim 2, wherein the condition includes an abnormal and inhibiting signal of the apparatus during an operation.
